# EUROPÄISCHE PATENTANMELDUNG

(11) **EP 2 141 062 A2**
(43) Veröffentlichungstag der Anmeldung: **06.01.2010**
(21) Anmeldenummer: 09007904.7
(22) Anmeldetag: 16.06.2009
(51) Int. Cl.: B62D 7/20, B62D 17/00

(54) **Spurhebel für ein Radfahrzeug mit Achsschenkellenkung und Verwendung des Spurhebels bei einem Fahrzeug**

(30) Priorität: 03.07.2008 DE 102008031215
(71) Anmelder: Rheinmetall Landsysteme GmbH, 24107 Kiel (DE)
(72) Erfinder: Hass, Frank, 24235 Wendtorf (DE); Neumann, Thomas, 24782 Büdelsdorf (DE); Boeckmann, Frank, 24623 Großenaspe (DE)
(74) Vertreter: Dietrich, Barbara

(57) **Zusammenfassung**

Spurhebel (7;7') für ein Radfahrzeug mit Achsschenkellenkung, welches wahlweise mit Vorderradlenkung oder Allradlenkung lenkbar ist, wobei der jeweilige Spurhebel (7;7') über eine hinsichtlich ihrer Länge veränderbare Spurstange (18) mit einer Lenkeinrichtung des Radfahrzeuges verbindbar ist.

Um auf einfache Weise eine Anpassung an die gewünschte Lenkgeometrie zu erreichen, so dass in beiden Fällen die Lenkgeometrie nach Ackermann erreicht wird, wird vorschlagen, dass der jeweilige Spurhebel (7;7') mindestens zweiteilig ausgebildet ist, wobei die beiden Hebelteile (8,12;8',12') lösbar miteinander verbunden sind. Dabei ist das erste Hebelteil (8;8') bei der bestimmungsgemäßen Verwendung des Spurhebels (7;7') fest mit dem Achsschenkel verbindbar, auf den der Spurhebel (7;7') wirken soll, während das sich im Wesentlichen radial zur Achsschenkelachse erstreckende zweite Hebelteil (12,12') mit der entsprechenden Spurstange (18) verbindbar ist.

## Beschreibung

Die Erfindung betrifft einen Spurhebel für ein Fahrzeug mit Achsschenkellenkung, insbesondere für ein Radfahrzeug bzw. ein wie Räder angeordneten Kettenfahrzeug, welches wahlweise in verschiedenen Positionen am Achsschenkel befestigt werden kann und mit Vorderradlenkung oder Allradlenkung lenkbar ist, wobei der jeweilige Spurhebel über eine hinsichtlich ihrer Länge veränderbare Spurstange mit einer Lenkeinrichtung des Fahrzeugs verbindbar ist. Die Erfindung bezieht sich ferner auf die Verwendung von einem oder mehreren derartigen Spurhebeln bei einem Fahrzeug, bei dem im Wesentlichen die gleichen Achsbausteine zur Lenkung der Vorder- und Hinterräder eingesetzt werden.

Radfahrzeugen, bei denen die Lenkbewegungen mittels Achsschenkellenkung erzeugt werden, besitzen ein Lenktrapez, das nach dem Ackermann-Prinzip ausgelegt ist, so dass bei einer Kurvenfahrt alle Räder des entsprechenden Fahrzeuges rollen ohne zu radieren. Dieses wird erreicht, wenn alle Räder des Fahrzeuges in Richtung ihrer Radebene um einen gemeinsamen Kurvenmittelpunkt rollen, wobei bei gelenkten Rädern das kurveninnere Rad stärker eingelenkt wird als das kurvenäußere. Im Falle einer Vorderradlenkung liegt der gemeinsame Kurvenmittelpunkt auf der gedachten Verlängerung der Hinterachse, während im Falle einer Allradlenkung der gemeinsame Kurvenmittelpunkt auf einer zwischen Vorder- und Hinterachse liegenden Querachse angeordnet ist.

Aus der DE 100 54 902 T1 ist ein Hinterradlenkung mit einer Hinter-Vorderachse und einer Hinter-Hinterachse bekannt, die sich dadurch auszeichnet, dass ein Steuermittel das lenken der Räder stoppt, wenn eine Fahrzeuggeschwindigkeit nahezu Null wird und einen Aktuator ansteuert, wenn eine bestimmte Differenz zwischen einem theoretischen Lenkwinkel der Hinter-Vorderräder bezogen auf denjenigen der Vorderräder und einem aktuellen Lenkwinkel überschritten wird.

Ein Lenksystem und ein Verfahren zur Steuerung eines Fahrzeugs mit einem Aktuator, der einen Endabschnitt einer Spurstange quer zur Richtung verschieben kann, in welcher der Endabschnitt von dem Lenkgetriebe verstellt werden kann, beschreibt die DE 103 38 998 A1.

Eine Serie von Dokumenten wie DE 10 2004 053 722 A1, DE 10 2004 053 7723 A1, DE 10 2004 053 724 A1, DE 10 2004 053 725 A1, DE 10 2004 053 726 A1 sowie DE 10 2004 053 727 A1 beschäftigt sich mit verschiedenen Achsschenkellenkungen für lenkbar ausgeführte Fahrzeugachsen.

Mit der DE 10 2005 023 284 A1 wird eine weitere Vorrichtung zur Lenkung von Rädern eines Fahrzeuges mit Achsschenkellenkung beschrieben, bei welcher durch eine im Betrieb des Fahrzeugs veränderliche wirksame Länge einer Kolbenstange eine Lenkwinkelabweichung einstellbar ist. Auch die DE 10 2005 023 288 A1 beschäftigt sich damit.

Ein Lenksystem und Verfahren zum Bewegen von Rädern eines zweispurigen Fahrzeuges schlägt auch die DE 10 2006 008 668 A1 vor. Die hier verwendete Vorderradlenkung besitzt zwei separate Räder sowie eine Erfassungsvorrichtung zur Erfassung eines momentanen Fahrzeugzustandes. Der jeweilige Lenkvorgang ist abhängig vom detektierten Fahrzeugzustand, die Räder werden davon abhängig mit einem im Wesentlichen gleich großen oder einem unterschiedlichen Lenkwinkel eingestellt.

Ein aus der DE 10 2005 023 286 A1 bekanntes Verfahren sowie eine Vorrichtung zur Lenkungseinstellung und Lenkung von Rädern eines Fahrzeuges mit Achsschenkellenkung sind für einen Vierrad- als auch Zweirad-Modus gedacht. Dabei wird ein so genannter Ackermann-Schnittpunkt durch einen Bediener oder eine Vorrichtung entlang der Fahrzeuglängsachse und /oder deren Verlängerung innerhalb eines durch den maximalen Lenkwinkel der Radachsen bestimmten Bereich verschoben.

Bei einem Fahrzeug, das wahlweise mit Vorderradlenkung oder Allradlenkung betrieben werden kann, muss der Lenkwinkeldifferenzwinkel an der Vorderachse bei zugeschalteter Hinterachslenkung variiert werden, da sich die (gedachten) Linien durch die Achsen der gelenkten Räder sich mit denen der gelenkten Hinterräder in einem Punkt treffen müssen.

Bei Allradlenkung müssen die (sich gedachten) Linien durch die Achsen aller Räder sich in einem Punkt treffen, bei gleichem Lenkeinschlag an Vorder- und Hinterachse muss dieser Punkt auf halbem Abstand zwischen Vorder- und Hinterachse liegen.

Der Erfindung liegt die Idee zugrunde, um gleiche Achsen für die Vorder- als auch die Hinterachse(n) vorzusehen bzw. nutzen zu können, eine Variation der Lenktrapeze vorzusehen. Eine lenkbare Hinterachse erfordert dabei ein zur Vorderachse umgedrehtes Lenktrapez, da sich die (gedachten) Linien durch die Achsen der gelenkten Räder (Einzelradaufhängung) in einem Punkt auf der (gedachten) Linie der Vorderachsen treffen müssen.

Die verschiedenen Lenktrapeze können ihrerseits durch einen vorzugsweise zwei- oder mehrteiligen Spurhebel geschaffen werden. Ein Teil des Spurhebels, der am Achsschenkel beispielsweise verschraubt ist, bleibt unverändert. Der andere Teil wird vorzugsweise durch eine teleskopierbare Lenk- bzw. Spurstange gebildet. Das Ende des Spurhebels, das mit der Spurstange bevorzugt über Kugelköpfe verbunden ist, kann in verschiedenen Positionen am Achsschenkel fixiert werden. Die beiden Teile des Spurhebels sind formschlüssig und spielfrei miteinander verbunden. Das umsteckbare erste Teil des Spurhebels kann gelöst, umgesteckt und beispielsweise festgeschraubt werden, ohne die Verbindung zur Spurstange lösen zu müssen. Der Längenausgleich der Spurstange erfolgt dann vorzugsweise über den vorhandenen Einstellweg an der Spurstange, der normalerweise zur Spureinstellung der Achse genutzt wird.

Durch das Umpositionieren des jeweiligen, vorne wie hinten abgebrachten gleichen Spurhebelteils sowie der Längenänderung des zweiten Teils des Spurhebels werden somit bei gleichen Teilen verschiedene Lenktrapeze realisiert. Bei einer kürzeren Lenkstange (beispielsweise vorderes Lenktrapez) weisen die Spurhebel nach innen, bei einer längeren Lenkstange (beispielsweise hinteres Lenktrapez) nach außen, bezogen auf eine gedachte Fahrzeugmittellinie.

Durch das Umstecken des Spurhebels auf der Hinterachse wird erreicht, dass die Radanstellungen rechts - vorne und hinten - einen gleichen Winkel haben und die Radanstellungen links - vorne und hinten - ebenfalls. Somit wird auf einfache Weise eine Anpassung an die gewünschte Lenkgeometrie erreicht, so dass in beiden Fällen die Lenkgeometrie nach Ackermann erreicht wird.

Es hat sich gezeigt, dass diese Konstruktion auch bei 3 und Mehrachsfahrzeugs verwendbar ist. Durch eine derartige, mindestens zweiteilige Ausgestaltung des Spurhebels ist es möglich, durch unterschiedliche Wahl der Längen des zweiten Hebelteils jede gewünschte Lenkgeometrie auf einfache Art und Weise zu erreichen. Das lösbare Teil bleibt dabei das gleiche, wird aber in unterschiedlichen Positionen fixiert. Dadurch ändert sich das Lenktrapez. Befinden sich die Achsen im vorderen Bereich des Fahrzeuges, sollten die Lenktrapeze zur Fahrzeugmittellinie gesehen, nach innen weisen. Sind die zu lenkenden Achsen im hinteren Bereich des Fahrzeuges vorgesehen, sind längere Lenkhebel einzustellen, so dass diese Lenktrapeze dann nach außen weisen.

Die Anbringung der Achsen wird durch die vorgeschlagene Konstruktion individuell gestaltbar und kann den gewünschten Gegebenheiten am Fahrzeug angepasst werden.

Mit dieser Konstruktion wird erreicht, dass die verschiedenen Achsen den gleichen Aufbau jedoch mit variablen Lenktrapezen aufweisen.

Weitere Einzelheiten und Vorteile der Erfindung ergeben sich aus den folgenden, anhand von Figuren erläuterten Ausführungsbeispielen.

### Es zeigen:

- Fig. 1: die Anordnung der Räder eines Fahrzeuges mit zwei lenkbaren Achsen, wobei nach der Ackermannbedingung alle Räder ohne zu radieren um einen gemein samen Kurvenpunkt rollen, und zwar sowohl für den Fall der Vorderradlenkung (gestrichelte Darstellung) als auch für den Fall der Allradlenkung;
- Fig. 2: eine Darstellung einer Vorderradlenkung;
- Fig. 3: eine Darstellung einer Hinterradlenkung mit gleichen Achsbausteinen wie für die Vorderradlenkung;
- Fig. 4: eine vergrößerte perspektivische Darstellung der in Fig. 2 dargestellten Lenkung;
- Fig. 5: den Spurhebel aus Fig. 4;
- Fig. 6: eine vergrößerte perspektivische Ansicht der in Fig. 3 dargestellten Lenkung;
- Fig. 7: den Spurhebel aus Fig. 6;
- Fig. 8: den Spurhebel mit Verlängerungsadapter für eine Mittelachsanordnung;
- Fig. 9: den Spurhebel aus Fig. 7;
- Fig.10: eine der Fig.1 entsprechende Ansicht eines Fahrzeuges mit drei gelenkten Achsen für den Fall eines Mehrachsfahrzeugs.

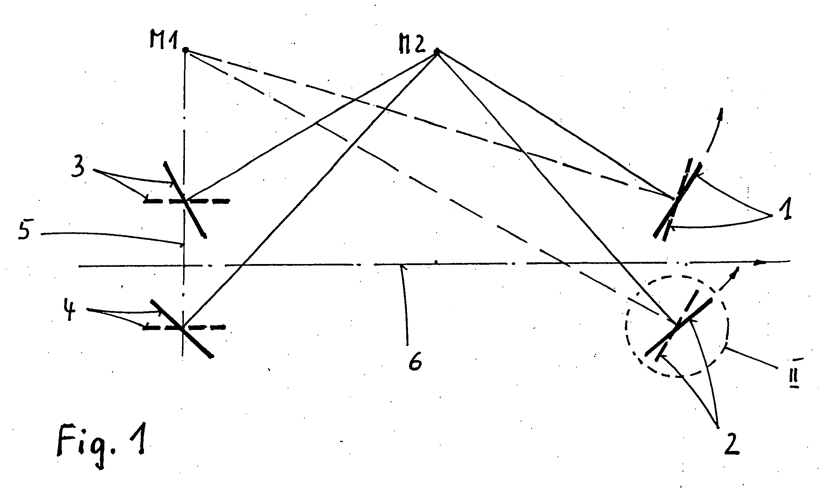

In Fig. 1 ist die Anordnung der Räder 1 - 4 eines nicht näher dargestellten (4X4) Fahrzeugs dargestellt, welches eine Kurve durchfährt (so genannte statische Kurvenfahrt) und für die nach der Ackermannbedingung alle Räder ohne zu radieren um einen gemeinsamen Kurvenpunkt rollen. Dabei deuten die gestrichelten Linien den Fall einer Vorderradlenkung an, bei welcher lediglich die beiden Vorderräder 1 und 2 gelenkt werden und unterschiedliche Einschlagwinkel aufweisen, derart, dass sich ein Spurdifferenzwinkel ergibt, der zu einem gemeinsamen Kurvenmittelpunkt M1 führt, welcher auf der verlängerten Hinterachse 5 liegt.

Die ausgezogenen Linien in Fig. 1 zeigen den Fall einer Allradlenkung, bei welcher auch die Hinterachse 5 gelenkt wird. In diesem Fall sind die Einschlagwinkel der Vorder- 1, 2 und Hinterräder 3, 4 derart gewählt, dass sich ein gemeinsamer Kurvenmittelpunkt M2 ergibt, der auf einer Querachse (nicht dargestellt) liegt, welche die Fahrzeuglängsachse 6 etwa in der Mitte des Fahrzeuges schneidet.

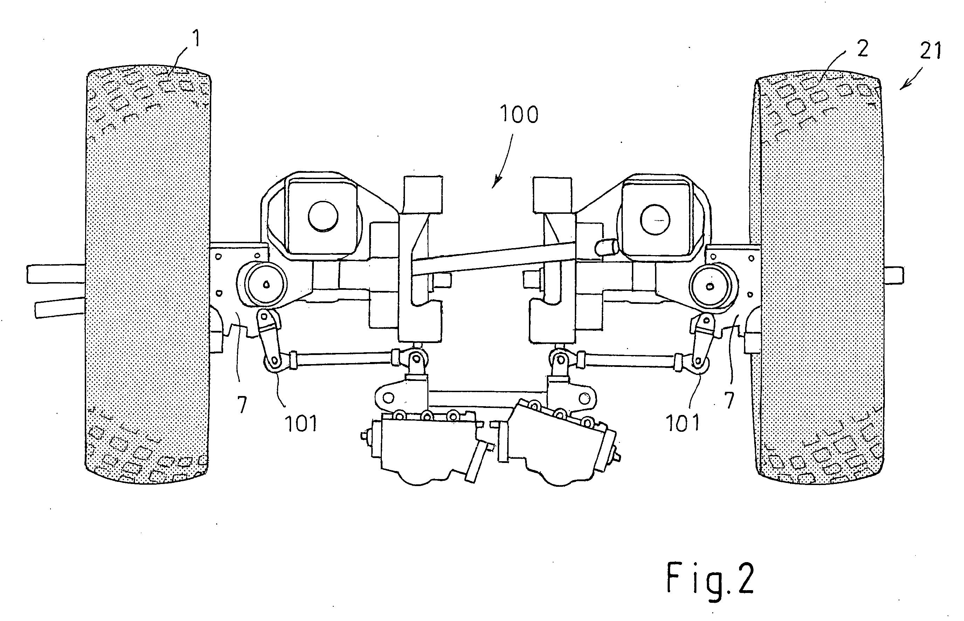

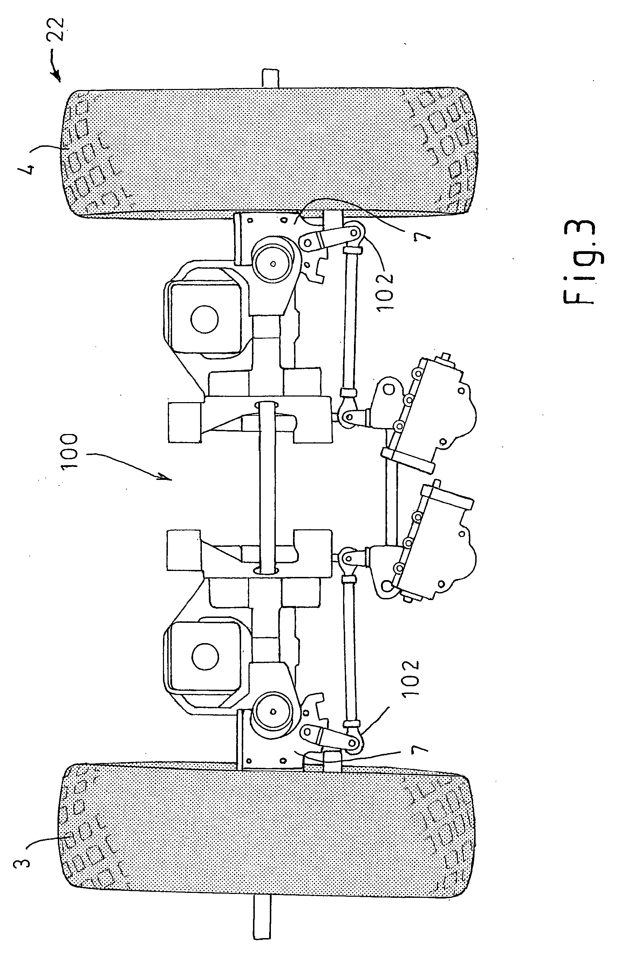

Wie Fig.1 zu entnehmen ist, muss in dem Fall der Allradlenkung bei gleichem Lenkradeinschlag wie bei der Vorderradlenkung ein geringerer Einschlagwinkel der Vorderräder 1, 2 vorliegen, damit die Ackermannbedingung erfüllt ist. Entsprechend ist für die Hinterräder 3, 4 ein anderes Lenktrapez (101, 102 in Fig. 2, 3) notwendig, als bei den Vorderrädern 1, 2.

In der Fig. 2 ist eine Vorderradlenkung 21 näher dargestellt, wobei auf die Funktion bzw. Wirkungsweise einer Lenkung nicht näher eingegangen wird, da bekannt. Die Gesamtkonstruktion wird mit 100 gekennzeichnet und als Achsbaustein benannt und ist identisch mit der Gesamtkonstruktion einer in Fig. 3 dargestellten Hinterradlenkung 22. Einziger notwendiger Unterschied - die beiden Lenktrapeze 101, 102 (wird noch näher erläutert).

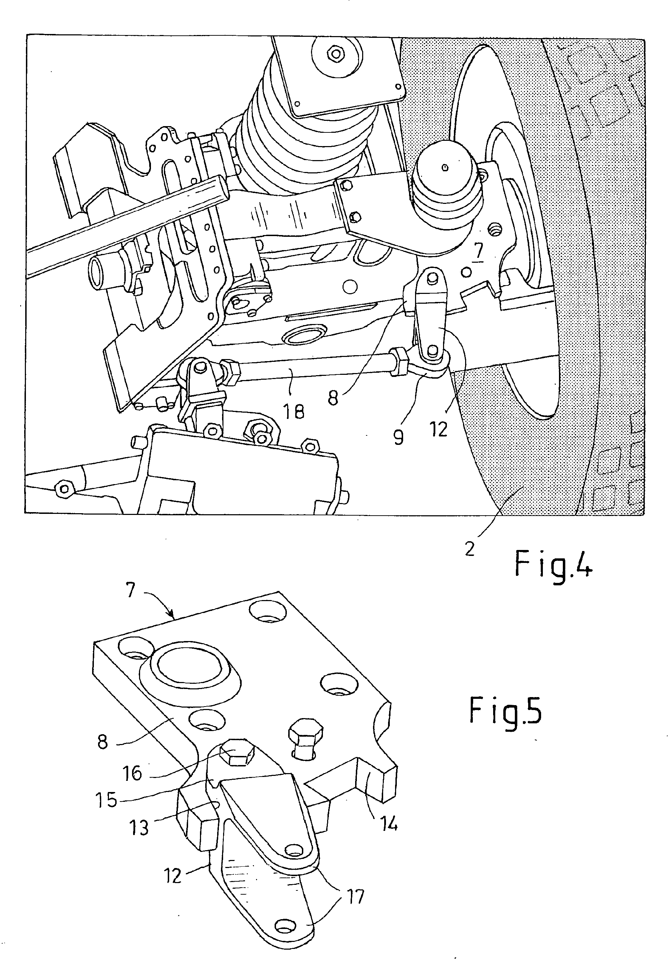

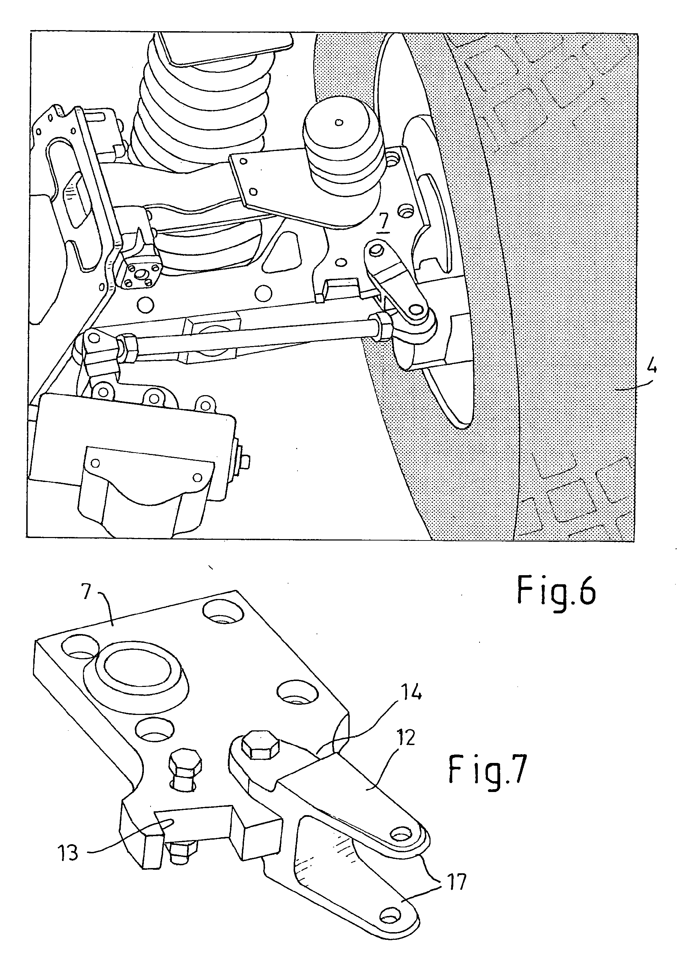

In den Fig. 4 und 5, welche Teile die Vorderradlenkung 21 zeigen, und den Fig. 6 und 7, welche Teile der Hinterradlenkung 22 näher darstellen, ist mit 7 ein erfindungsgemäßer Spurhebel bezeichnet, mit Hilfe dessen der jeweilige Spurhebelwinkel (und damit der Einschlagwinkel des entsprechenden Vorderrades 2 aus Fig. 1) verändert werden kann.

Der Spurhebel 7 ist hierbei zweiteilig ausgebildet. Das erste Hebelteil 8 ist fest mit dem Achsschenkel 10 des Vorderrades 2 bzw. Hinterrades 4 verbunden während es mit dem zweiten Hebelteil 12 des Spurhebels 7 lösbar verbunden ist. Das erste Hebelteil 8 selbst weist zwei benachbarte Ausnehmungen 13, 14 auf, in die das erste Ende 15 des zweiten Hebelteiles 12 eingebunden und in verschiedenen Positionen fixiert werden kann, so dass eine formschlüssige und spielfreie Verbindung zwischen den beiden Hebelteilen 8, 12 vorliegt. Diese Verbindung kann mittels einer Schraube 16 gesichert werden (Fig. 4 - Fig. 8).

Das gabelförmig ausgebildete zweite Ende 17 des sich im Wesentlichen radial zur Radachse erstreckenden zweiten Hebelteiles 12 ist mit einer entsprechenden Spurstange 18 über einen Kugelkopf 19 verbunden.

Soll nun diese Konstruktion als Vorderachse eingesetzt werden, wird das zweite Hebelteil 12 in die erste Ausnehmung 13 eingebracht, so dass ein Lenktrapez entsteht, bei dem das Hebelteil 12 nach innen weist (in Sicht auf eine gedachte Fahrzeugmittellinie).

Wird gleiche Konstruktion als Hinterachse eingesetzt, so wird durch Herausschrauben der Schraube 16 das zweite Hebelteil 12 gelöst, aus der ersten Ausnehmung 13 herausgezogen und in die benachbarte zweite Ausnehmung 14 umgesteckt und wieder festgeschraubt. Dadurch wird ein anderes Lenktrapez geschaffen, wobei hier das Hebelteil 12 nach außen in Richtung des Rades 2 weist. Ein Lösen der Verbindung zwischen dem zweiten Hebelteil 12 und Spurstange 18 ist bei diesem Vorgang nicht erforderlich. Der Längenausgleich der Spurstange 18 erfolgt über den vorhandenen Einstellweg an der Spurstange 18, der normalerweise zur Spureinstellung der jeweiligen Radachse genutzt wird.

Die Erfindung ist selbstverständlich nicht auf das vorstehend beschriebene Ausführungsbeispiel beschränkt. So kann beispielsweise auch durch die Wahl unterschiedlicher Längen des zweiten Hebelteiles die jeweils gewünschte Lenkgeometrie auf einfache Weise erreicht werden.

Um allerdings zu vermeiden, dass das zweite Hebelteil beim Austausch gegen ein anderes Hebelteil mit unterschiedlicher Länge von der Spurstange gelöst werden muss, hat es sich als vorteilhaft erwiesen, wenn das zweite Hebelteil aus einem Hebelteil mit fest vorgegebener Mindestlänge und einem Adapterteil variabler Länge besteht. Dabei bleibt das Hebelteil mit fest vorgegebener Mindestlänge auch dann mit seinem zweiten Ende ständig mit der zugeordneten Spurstange verbunden, wenn das zwischen dem ersten Hebelteil und dem Hebelteil angeordnete Adapterteil ausgetauscht wird. Eine solche Variante ermöglicht die Nutzung desselben Aschbausteines 100 für eine Mittelaschanordnung.

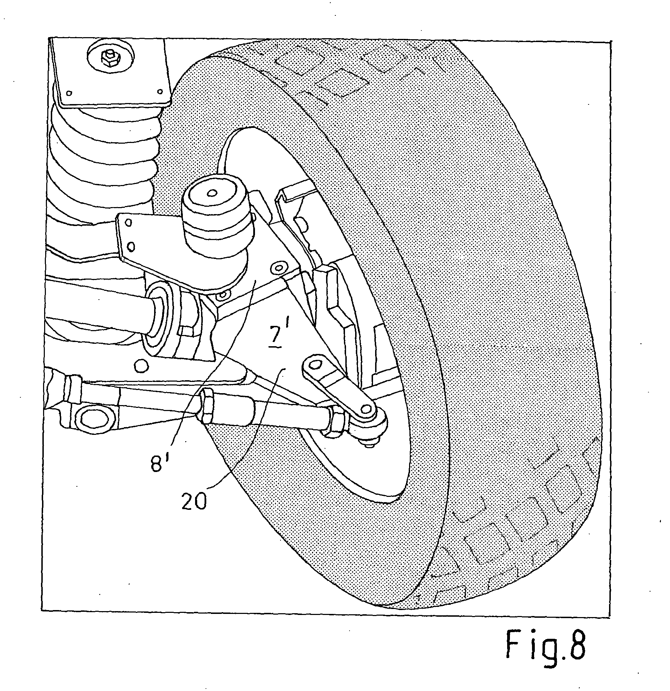

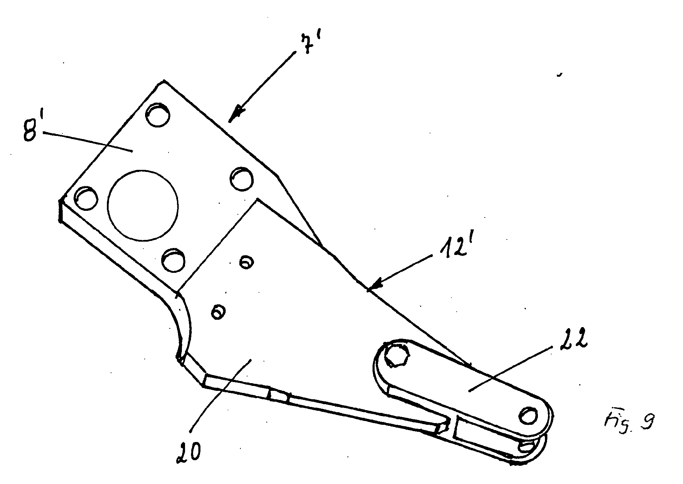

Ein derartiger Verlängerungsadapter ist aus Fig. 8 bzw. 9 entnehmbar, die einen mit 7' bezeichneten Spurhebel wiedergeben. Dabei sind das erste Hebelteil mit 8' und das zweite Hebelteil mit 12' bezeichnet. Das zweite Hebelteil 12' besteht in diesem Fall aus einem Hebelteil 22 mit fest vorgegebener Mindestlänge und dem auswechselbaren Adapterteil 20.

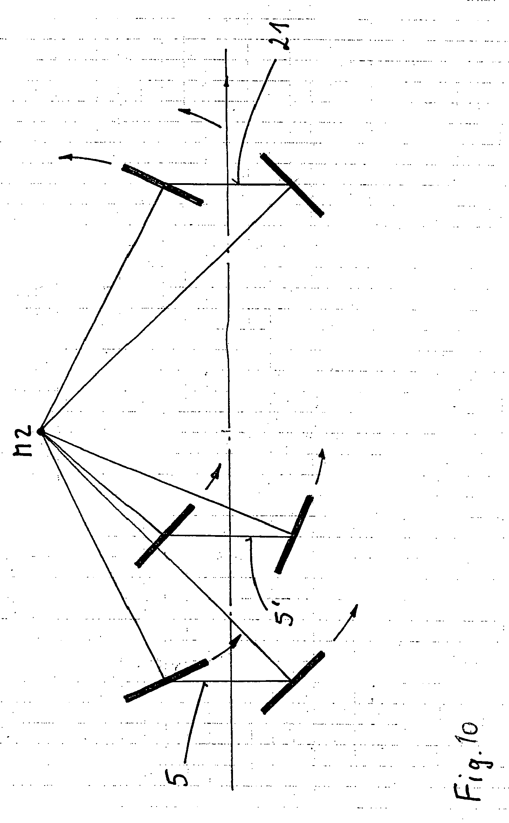

Fig. 10 zeigt die Radanordnung eines Fahrzeuges mit einer Vorderachse 21 und zwei Hinterachsen 5 und 5', wobei eine Allradlenkung erfolgt. Auch in diesem Fall können die gleichen Lenkungskomponenten für die Vorderachse 21 und die beiden Hinterachsen 5, 5'verwendet werden, sofern die Spurhebel zweiteilig ausgebildet sind. Hierzu muss auch an der mittleren Achse 5' dafür gesorgt werden, dass bei identischem Lenkradwinkel an den Spurhebeln ein geringerer Einschlagwinkel der Räder entsteht. Dabei muss ebenfalls erreicht werden, dass der Lenkdifferenzwinkel der mittleren Achse geringer ausfällt, um bei Allradlenkung die Lenkgeometrie nach Ackermann zu erreichen.

Wie vorstehend beschrieben ist dieses auf einfache Weise dadurch möglich, dass zwischen dem ersten und zweiten Hebelteil ein Verlängerungsadapter 20 angebracht wird (Fig. 4). Dadurch kann das Lenktrapez der mittleren Achse wie erforderlich geändert werden. Wahlweise kann auch der zweite Hebelteil des Spurhebels durch ein längeres Teil ersetzt werden.

### Bezugszeichenliste

- 1,2: Vorderräder
- 3,4: Hinterräder
- 5: Hinterachsen
- 5': Hinterachse, mittlere Achse
- 6: Fahrzeuglängsachse
- 7,7': Spurhebel
- 8,8': erstes Hebelteil
- 10: Achsschenkel
- 12,12': zweite Hebelteil
- 13: (erste) Ausnehmung
- 14: (zweite) Ausnehmung
- 15: erstes Ende (zweites Hebelteil)
- 16: Schraube
- 17: zweites Ende (zweites Hebelteil)
- 18: Spurstange
- 19: Kugelkopf
- 20: Adapterteil, Verlängerungsadapter
- 21: Vorderachse
- 22: Hebelteil

- 100: Achsbaustein
- 101: Lenktrapez Vorderachse
- 102: Lenktrapez Hinterachse

- M1,M2: gemeinsame Kurvenmittelpunkte

## Patentansprüche

1. Spurhebel (7, 7') für ein Radfahrzeug mit Achsschenkellenkung, welches wahlweise mit Vorderradlenkung oder Allradlenkung lenkbar ist, wobei der jeweilige Spurhebel (7; 7') über eine hinsichtlich ihrer Länge veränderbare Spurstange (18) mit einer Lenkeinrichtung des Radfahrzeuges verbindbar ist, mit den Merkmalen:
a) der Spurhebel (7; 7') umfasst mindestens zwei miteinander verbundene Hebelteile (8, 12; 8', 12');
b) das erste Hebelteil (8; 8') ist bei der bestimmungsgemäßen Verwendung des Spurhebels (7; 7') mit dem Achsschenkel (10), auf den der Spurhebel (7; 7') wirken soll, fest verbindbar;
c) das zweite Hebelteil (12; 12') ist mit einem ersten Ende (15) mit dem ersten Hebelteil (8; 8') lösbar verbunden und bei der bestimmungsgemäßen Verwendung des Spurhebels (7; 7') mit seinem gegenüberliegenden zweiten Ende (17) mit der dem Spurhebel (7; 7') zugeordneten Spurstange (18) verbindbar.

2. Spurhebel nach Anspruch 1, **dadurch gekennzeichnet, dass** das erste Hebelteil (8) randseitig zwei in Schwenkrichtung des dem Spurhebel (7, 7') bei seiner bestimmungsgemäßen Verwendung zugeordneten Achsschenkels (10) benachbarte Ausnehmungen (13, 14) aufweist, wobei das erste Ende (15) des zweiten Hebelteiles (12) in Abhängigkeit von der Anbringung der Achsschenkellenkung am Fahrzeug formschlüssig in eine der beiden Ausnehmungen (13, 14) eingreift.

3. Spurhebel nach Anspruch 1 oder 2, **dadurch gekennzeichnet, dass** die Länge des zweiten Hebelteiles (12, 12') unterschiedlich wählbar ist.

4. Spurhebel nach Anspruch 3, **dadurch gekennzeichnet, dass** das zweite Hebelteil (12') aus einem Hebelteil (22) mit einer fest vorgegebenen Mindestlänge und einem auswechselbaren Adapterteil (20) besteht, wobei das zweite Ende des Hebelteiles (22) mit fest vorgegebener Länge mit der dem Spurhebel (7') zugeordneten Spurstange (18) verbindbar ist und das Adapterteil (20) zwischen dem ersten Hebelteil (8') und dem Hebelteil (22) mit fest vorgegebener Länge lösbar befestigt ist.

5. Fahrzeug mit wenigstens einer Vorderradlenkung (21) und wenigstens einer Hinterradlenkung (5, 5') mit einem Spurhebel (7) nach einem der Ansprüche 1 bis 4, wodurch bei gleichen Achsbausteinen (100) unterschiedliche Lenktrapeze (101, 102) einstellbar sind.
